# DEMANDE DE BREVET EUROPEEN

(11) **EP 0 831 039 A1**
(43) Date de publication de la demande: **25.03.1998**
(21) Numéro de dépôt: 97490031.8
(22) Date de dépôt: 22.09.1997
(51) Int. Cl.: B65G 47/08, B65G 47/51, B65G 21/14

(54) **Installation pour l'emmagasinage temporaire d'articles et procédé de commande du fonctionnement de cette installation**

(30) Priorité: 24.09.1996 FR 9611829
(71) Demandeur: Sierem S.A., 59560 Comines (FR)
(72) Inventeur: Remericq, Maurice, 59166 Bousbecque (FR)
(74) Mandataire: Ecrepont, Robert

(57) **Abrégé**

L'invention se rapporte une installation (1), pour l'emmagasinage d'articles (2) puis le déchargement par lots (3), comprenant :
- un élément souple (5) qui, constituant une boucle de convoyage, :
   . coopère avec des organes rotatifs (6 à 10) de guidage et de commande de sa circulation selon un sens (C1, C2) sur un parcours polygonal et,
   . porte des moyens (5A) d'accueil des articles,
- un poste (P1) de chargement des articles (2) sur l'élément de convoyage (5),
- un poste (P2, P3) de retrait de lots placés sur l'élément de convoyage, et ce, dans une partie rectiligne (5B, 5C) de cet élément (5),
- un moyen (15A, 15B) de commande du défilement de l'élément de convoyage devant les différents postes (P1, P2, P3),
- un dispositif (16) de gestion du fonctionnement de l'installation.

## Description

L'invention se rapporte à une installation pour l'emmagasinage temporaire d'articles, notamment plats, acheminés à un poste de chargement, puis le déchargement de ces articles, notamment par lots.

L'invention concerne également un procédé de commande du fonctionnement de cette installation.

L'invention concerne plus particulièrement, mais non exclusivement une installation pour l'emmagasinage temporaire d'articles plats, tels des produits d'hygiène, en vue de la constitution de lots destinés à être emballés.

Un résultat que l'invention vise à obtenir est une installation qui permette de décharger, c'est à dire de produire des lots d'articles en au moins deux postes distincts, et ce, pendant qu'elle continue d'accepter l'emmagasinage d'autres articles au poste à cet effet, c'est à dire sans pénaliser la cadence de production d'une machine de production d'articles (non représentée) située en amont du poste de chargement.

Par exemple, des lots destinés à être traités automatiquement par une machine d'emballage peuvent être prélevés à l'un des postes de déchargement, tandis qu'au moins un autre lot peut être prélevé à un autre poste de déchargement, notamment pour être traité manuellement.

Un autre résultat que l'invention vise à obtenir est une installation qui permette, le cas échéant, de ne produire qu'un lot d'articles, c'est à dire, par exemple, en cas d'arrêt d'un dispositif d'emballage des lots d'articles issus d'un poste de production.

A cet effet, l'invention a pour objet une installation du type précité, notamment caractérisée en ce que :
- les organes rotatifs situés au niveau des extrémités écartées d'au moins deux des brins adjacents de l'élément de convoyage, c'est à dire de deux brins qui, situés de part et d'autre d'un même organe rotatif, s'étendent selon des directions sécantes, sont chacun :
   . portés par un moyen de guidage en translation selon une direction sensiblement parallèle à la direction du brin avec l'extrémité duquel ils coopèrent,
   . au moins élastiquement sollicités dans un sens de déplacement induisant la tension du brin considéré,
- l'organe rotatif, de part et d'autre duquel s'étendent les deux brins précités, et au moins un autre organe rotatif de l'installation sont chacun associés à un moyen sélectivement d'entraînement et de freinage en rotation de manière à constituer le moyen de commande du défilement de l'élément de convoyage devant les différents postes de chargement et de retrait, et
- au moins deux moyens distincts de retrait de lots d'articles se trouvent disposés chacun pour extraire des lots d'articles situés sur l'un des brins précités.

L'invention a également pour objet un procédé de commande du fonctionnement de l'installation précitée.

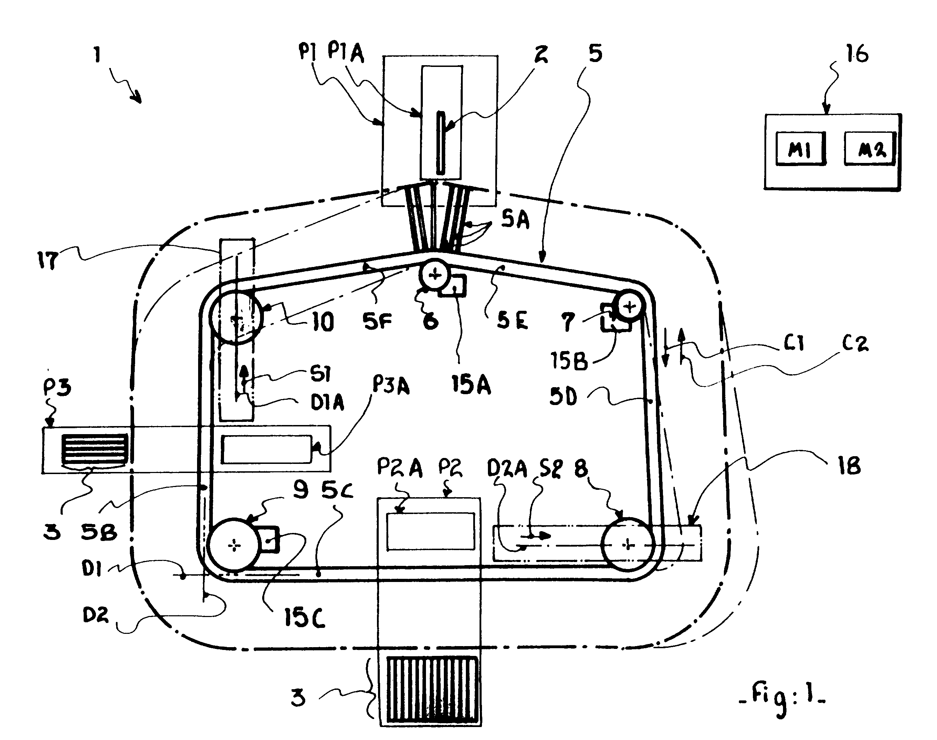

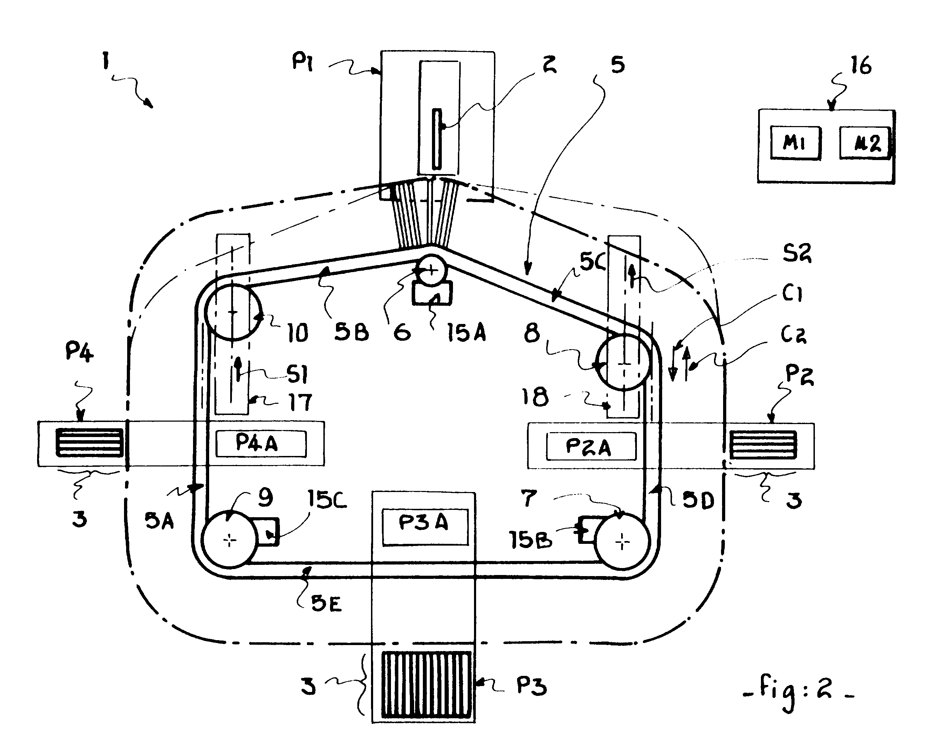

L'invention sera bien comprise à l'aide de la description ci-après faite à titre d'exemple non limitatif en regard du dessin ci-annexé qui représente schématiquement, aux figures 1 et 2 une installation selon l'invention, en vue de dessus et selon deux formes de réalisation.

En se reportant au dessin, on voit une installation 1 pour l'emmagasinage temporaire d'articles 2, notamment plats, puis le déchargement de ces articles, notamment par lots 3.

Outre un bâti (non représenté), l'installation 1 comprend au moins :
- un élément souple 5 qui, constituant une boucle de convoyage fermée dans un plan approximativement horizontal, d'une part, coopère avec des organes rotatifs 6 à 10 de guidage et de commande de sa circulation selon un sens C1, C2 sur un parcours polygonal déterminé et, d'autre part, porte des moyens 5A d'accueil des articles,
- un poste P1 de chargement des articles 2 sur l'élément de convoyage 5, lequel poste comprend au moins un moyen P1A de chargement,
- un poste P2, P3, P4 de retrait de lots d'articles 2 placés sur l'élément de convoyage, et ce, dans une partie rectiligne 5B, 5C de cet élément 5, lequel poste P2, P3, P4 comprend au moins un moyen P2A, P3A, P4A de retrait de lots d'articles 2,
- un moyen 15A, 15B, 15C de commande du défilement de l'élément de convoyage devant les différents postes P1, P2, P3, P4, et
- un dispositif 16 de gestion du fonctionnement de l'installation, c'est à dire tant des moyens 15A, 15B, 15C de commande du défilement de l'élément de convoyage que des postes de chargement et de retrait P1, P2, P3, P4.

Les organes rotatifs 6 à 10 sont disposés de manière telle que l'élément souple 5 comporte des brins 5B, 5C, 5D, 5E, 5F distincts sensiblement rectilignes disposés selon les côtés d'un polygone.

De manière remarquable :
- les organes rotatifs 8, 10 situés au niveau d'extrémités écartées de brins d'au moins un groupe de deux brins adjacents 5B, 5C de l'élément 5 de convoyage, c'est à dire de deux brins 5B, 5C qui, situés de part et d'autre d'un même organe 6, 9 rotatif, s'étendent selon des directions sécantes D1, D2, sont chacun :
   . portés par un moyen 17, 18 de guidage en translation selon une direction D1A, D2A sensiblement parallèle à la direction D1, D2 du brin 5B, 5C avec l'extrémité duquel ils coopèrent,
   . au moins élastiquement sollicités dans un sens S1, S2 de déplacement induisant la tension du brin 5B, 5C considéré,
- l'organe rotatif 6, 9, de part et d'autre duquel s'étendent les deux brins 5B, 5C précités, et au moins un autre organe rotatif 7 de l'installation sont chacun associés à au moins un élément commandé 15A, 15B, 15C d'action au moins indirecte sur sa rotation de manière à constituer le moyen 15A, 15B, 15C de commande du défilement de l'élément de convoyage 5 devant les différents postes P1, P2, P3, P4 de chargement et de retrait, et
- au moins deux moyens P2A, P3A, P4A distincts de retrait de lots d'articles se trouvent disposés chacun pour extraire des lots d'articles situés sur l'un des brins précités 5B, 5C.

Ces particularités techniques permettent d'obtenir le résultat annoncé pour l'invention, à savoir, une installation qui permette de décharger, c'est à dire de produire des lots 3 d'articles en au moins deux postes distincts P2, P3, P4, et ce, pendant qu'elle continue d'accepter l'emmagasinage d'autres articles au poste à cet effet, c'est à dire sans pénaliser la cadence de production d'une machine de production d'articles (non représentée) située en amont du poste de chargement.

Par exemple, des lots 3 destinés à être automatiquement traités par une machine d'emballage (non représentée) peuvent être prélevés à l'un P2 (figure 1), P3 (figure 2) des postes P2, P3, P4 de déchargement, tandis qu'au moins un autre lot 3 peut être prélevé à un autre poste P3 (figure 1), P2, P4 (figure 2) de déchargement, notamment pour être traité manuellement.

De manière remarquable, au moins certains des éléments commandés 15A, 15B, 15C d'action au moins indirecte sur la rotation d'organes rotatifs 6, 7, 9 coopérant avec l'élément de convoyage, sont de type à deux sens de rotation.

De manière également remarquable, au moins certains des éléments commandés 15A, 15B, 15C d'action au moins indirecte sur la rotation d'organes rotatifs 6, 7, 9 coopérant avec l'élément de convoyage, consiste en un élément à même de réaliser sélectivement au moins l'une des opérations que sont la commande et l'immobilisation en rotation de chaque organe rotatif 6, 7, 9 équipé.

Cela permet, notamment, que l'élément 5 de convoyage puisse être déplacé dans deux sens opposés.

La construction d'une installation 1 conforme à ces caractéristiques permet l'obtention des résultats annoncés plus avant.

L'invention est également relative à un procédé de gestion du fonctionnement de l'installation.

Ce procédé est remarquable en ce que, pour, en au moins deux postes successifs de retrait P2, P3, P4 de l'installation, c'est à dire en des postes successifs selon un sens déterminé de défilement de l'élément 5 de convoyage, permettre le retrait de lots 3 chacun d'un nombre déterminé d'articles :
- au niveau du poste P1 de chargement, on fait défiler l'élément 5 de convoyage et on place sur cet élément un nombre d'articles au moins égal à la somme des nombres d'articles devant composer les lots 3 des postes successifs, et
- lors du défilement de l'élément 5 de convoyage devant chaque poste de retrait P2, P3, P4 d'un lot 3 d'un nombre déterminé d'articles, au moins sensiblement avant de procéder au retrait du lot au niveau dudit poste, on laisse passer un nombre d'articles au moins égal à la somme des nombres d'articles destinés à constituer les lots des postes de retrait qui, selon le sens de défilement de l'élément de convoyage, suivent le poste considéré.

Par exemple, pour charger un nombre déterminé d'articles sur l'élément 5 de convoyage, au niveau du poste de chargement P1, on commande la rotation d'au moins l'un des organes 6, 7, 9 rotatifs et on libère tous les autres organe rotatifs, et ce, au moins jusqu'au chargement complet du nombre déterminé d'articles sur l'élément de convoyage.

Pour extraire un nombre également déterminé d'articles, au niveau d'un poste déterminé de déchargement P2, P3, P4, par défilement de l'élément de convoyage, au moins devant le poste déterminé de déchargement :
- on amène le nombre déterminé d'articles devant le dit poste de déchargement P2, P3, P4 et on immobilise l'élément de convoyage au moins au niveau du dit poste P2, P3, P4 en immobilisant en rotation au moins l'un des organes rotatifs 6, 7, 9 entre lesquels se trouve tendu le brin de l'élément de convoyage duquel doivent être déchargés les articles,
- pendant l'immobilisation de l'élément de convoyage, devant le poste de déchargement P2, P3, P4, on extrait les articles, et le cas échéant, on continue à charger des articles au niveau du poste de chargement P1.

Lorsque le poste P1 de chargement continue de fonctionner pendant le déchargement de lots d'articles, cela induit les déplacements en translation d'au moins l'un des organes rotatifs 8, 10 qui sont portés par un moyen 17, 18 de guidage en translation selon une direction D1A, D2A sensiblement parallèle à la direction D1, D2 du brin 5B, 5C de l'élément 5 de convoyage avec l'extrémité duquel ils coopèrent.

L'homme de l'art est à même de déterminer la course de guidage en translation qu'il y a lieu de prévoir pour que le défilement de l'élément devant le poste de chargement P1 puisse être assuré pendant toute la durée du déchargement d'un lot d'articles.

De manière remarquable, lorsqu'un lot 3 d'articles 2 a été déchargé et qu'au moins l'un des organes rotatifs 8, 10 guidé en translation a subi un déplacement en translation d'une position première vers une position seconde, afin de permettre audit organe rotatif 8, 10 déplacé de retrouver sa position première sous l'effet d'un moyen de rappel élastique, alors qu'on surveille la position de chaque organe 8, 10 translaté, on ajuste sélectivement la vitesse de rotation des organes rotatif 6, 7, 9 placés sous l'effet des éléments commandés 15A, 15B, 15C d'action au moins indirecte sur leur rotation, de manière telle que le retour vers la dite position première s'effectue progressivement.

Le procédé de gestion du fonctionnement de l'installation, c'est à dire, tant des moyens 15A, 15B, 15C de commande du défilement de l'élément de convoyage que des postes de chargement et de retrait, est mis en oeuvre dans le dispositif lA de commande de l'installation 1.

Avantageusement, le dispositif 16 de gestion du fonctionnement de l'installation comprend :
- au moins un premier moyen M1 de commande du poste P1 de chargement et des moyens 15A, 15B, 15C de commande du défilement de l'élément de convoyage 5 de manière à engendrer le placement sur l'élément 5 de convoyage d'un nombre d'articles au moins égal à la somme des nombres d'articles devant composer les lots des postes successifs de retrait, et
- au moins un second moyen M2 de commande des postes de retrait et des moyens 15A, 15B, 15C de commande du défilement de l'élément de convoyage 5 de manière à engendrer, lors du défilement de l'élément 5 de convoyage devant chaque poste de retrait P2, P3, P4 d'un lot 3 d'un nombre déterminé d'articles, au moins sensiblement avant le retrait du lot au niveau dudit poste, le passage d'un nombre d'articles au moins égal à la somme des nombres d'articles destinés à constituer les lots des postes de retrait qui, selon le sens de défilement C1, C2 de l'élément de convoyage, suivent le poste considéré.

## Revendications

1. Installation (1) pour l'emmagasinage temporaire d'articles (2), notamment plats, puis le déchargement de ces articles, notamment par lots (3) d'un nombre déterminé d'articles,
cette installation (1) comprenant au moins :
- un élément souple (5) qui, constituant une boucle de convoyage fermée dans un plan approximativement horizontal, d'une part, coopère avec des organes rotatifs (6 à 10) de guidage et de commande de sa circulation selon un sens (C1, C2) sur un parcours polygonal déterminé et, d'autre part, porte des moyens (5A) d'accueil des articles,
- un poste (P1) de chargement des articles (2) sur l'élément de convoyage (5), lequel poste comprend au moins un moyen (P2A) de chargement,
- un poste (P2, P3, P4) de retrait de lots d'articles (2) placés sur l'élément de convoyage, et ce, dans une partie rectiligne (5B, 5C) de cet élément (5), lequel poste (P2, P3, P4) comprend au moins un moyen (P2A, P3A, P4A) de retrait de lots d'articles (2),
- un moyen (15A, 15B, 15C) de commande du défilement de l'élément de convoyage devant les différents postes (P1, P2, P3, P4),
- un dispositif (16) de gestion du fonctionnement de l'installation, c'est à dire tant des moyens (15A, 15B, 15C) de commande du défilement de l'élément de convoyage que des postes de chargement et de retrait (P1, P2, P3, P4),
dans cette installation, les organes rotatifs (6 à 10) étant disposés de manière telle que l'élément souple (5) comporte des brins (5B, 5C, 5D, 5E, 5F) distincts sensiblement rectilignes disposés selon les cotés d'un polygone,
cette installation étant **CARACTERISEE** en ce que :
- les organes rotatifs (8, 10) situés au niveau d'extrémités écartées de brins d'au moins un groupe de deux brins adjacents (5B, 5C) de l'élément (5) de convoyage, c'est à dire de deux brins (5B, 5C) qui, situés de part et d'autre d'un même organe (6, 9) rotatif, s'étendent selon des directions sécantes (D1, D2), sont chacun :
. portés par un moyen (17, 18) de guidage en translation selon une direction (D1A, D2A) sensiblement parallèle à la direction (D1, D2) du brin (5B, 5C) avec l'extrémité duquel ils coopèrent,
. au moins élastiquement sollicités dans un sens (S1, S2) de déplacement induisant la tension du brin (5B, 5C) considéré,
- l'organe rotatif (6, 9), de part et d'autre duquel s'étendent les deux brins (5B, 5C) précités, et au moins un autre organe rotatif (7) de l'installation sont chacun associés à au moins un éléments commandé (15A, 15B, 15C) d'action au moins indirecte sur sa rotation de manière à constituer le moyen (15A, 15B, 15C) de commande du défilement de l'élément de convoyage (5) devant les différents postes (P1, P2, P3, P4) de chargement et de retrait, et
- au moins deux moyens (P2A, P3A, P4A) distincts de retrait de lots d'articles se trouvent disposés chacun pour extraire des lots d'articles situés sur l'un des brins précités (5B, 5C).

2. Installation selon la revendication 1 **caractérisée** en ce qu'au moins certains des éléments commandés (15A, 15B, 15C) d'action au moins indirecte sur la rotation d'organes rotatifs (6, 7, 9) coopérant avec l'élément de convoyage, sont de type à deux sens de rotation.

3. Installation selon la revendication 1 ou 2 **caractérisée** en ce qu'au moins certains des éléments commandés (15A, 15B, 15C) d'action au moins indirecte sur la rotation d'organes rotatifs (6, 7, 9) coopérant avec l'élément de convoyage, consiste en un élément à même de réaliser sélectivement au moins l'une des opérations que sont la commande et l'immobilisation en rotation de chaque organe rotatif (6, 7, 9) équipé.

4. Procédé de gestion du fonctionnement de l'installation selon l'une des revendications 1 à 3 **caractérisé** en ce que, pour, en au moins des postes successifs de retrait (P2, P3, P4) de l'installation, c'est à dire en des postes successifs selon un sens déterminé de défilement de l'élément (5) de convoyage, permettre le retrait de lots (3) chacun d'un nombre déterminé d'articles :
- au niveau du poste (P1) de chargement, on fait défiler l'élément 5 de convoyage et on place sur cet élément un nombre d'articles au moins égal à la somme des nombres d'articles devant composer les lots (3) des postes successifs, et
- lors du défilement de l'élément (5) de convoyage devant chaque poste de retrait (P2, P3, P4) d'un lot (3) d'un nombre déterminé d'articles, au moins sensiblement avant de procéder au retrait du lot au niveau dudit poste, on laisse passer un nombre d'articles au moins égal à la somme des nombres d'articles destinés à constituer les lots des postes de retrait qui, selon le sens de défilement de l'élément de convoyage, suivent le poste considéré.

5. Procédé de gestion du fonctionnement de l'installation selon l'une des revendications 1 à 3 **caractérisé** en ce que, lorsqu'un lot (3) d'articles (2) a été déchargé et qu'au moins l'un des organes rotatifs (8, 10) guidé en translation a subi un déplacement en translation d'une position première vers une position seconde, afin de permettre audit organe rotatif (8, 10) déplacé de retrouver sa position première sous l'effet d'un moyen de rappel élastique, alors qu'on surveille la position de chaque organe (8, 10) translaté, on ajuste sélectivement la vitesse de rotation des organes rotatif (6, 7, 9) placés sous l'effet des éléments commandés (15A, 15B, 15C) d'action au moins indirecte sur leur rotation, de manière telle que le retour vers la dite position première s'effectue progressivement.
